(19) Europäisches Patentamt
European Patent Office
Office européen des brevets

(11) **EP 2 426 838 B1**

(12) **FASCICULE DE BREVET EUROPEEN**

(45) Date de publication et mention de la délivrance du brevet:
**19.06.2019 Bulletin 2019/25**

(51) Int Cl.:
***H04B 17/00*** *(2015.01)*

(21) Numéro de dépôt: **11178515.0**

(22) Date de dépôt: **23.08.2011**

(54) **Procédé d'analyse de séries de mesures d'ondes électromagnétiques**

Messreihenanalyseverfahren von elektromagnetischen Wellen

Method of analysis of series of measurements of electromagnetic waves

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2010 FR 1057034**

(43) Date de publication de la demande:
**07.03.2012 Bulletin 2012/10**

(73) Titulaire: **Alcatel Lucent
91620 Nozay (FR)**

(72) Inventeurs:
• **Matsumoto, Michel
78141 Velizy (FR)**
• **Thiebaut, Matthieu
78141 Velizy (FR)**

(74) Mandataire: **Cabinet Camus Lebkiri
25 rue de Maubeuge
75009 Paris (FR)**

(56) Documents cités:
**WO-A2-2006/065679**

• **JOSE MARA MATIAS ET AL: "DRM (Digital Radio Mondiale) Local Coverage Tests Using the 26 MHz Broadcasting Band", IEEE TRANSACTIONS ON BROADCASTING, IEEE SERVICE CENTER, PISCATAWAY, NJ, US, vol. 53, no. 1, 1 mars 2007 (2007-03-01), pages 59-68, XP011172036, ISSN: 0018-9316, DOI: DOI:10.1109/TBC.2006.887168**

• **"Digital Radio Mondiale (DRM); Receiver Status and Control Interface (RSCI) European B roadcasting U nion U nion E uropéenne de R adio-Télévision EB UÜER; ETSI TS 102 349", IEEE, LIS, SOPHIA ANTIPOLIS CEDEX, FRANCE, vol. BC, no. V1.2.1, 1 November 2005 (2005-11-01), XP014032351, ISSN: 0000-0001**

• **DE LA VEGA D ET AL: "Generalization of the Lee Method for the Analysis of the Signal Variability", IEEE TRANSACTIONS ON VEHICULAR TECHNOLOGY, IEEE SERVICE CENTER, PISCATAWAY, NJ, US, vol. 58, no. 2, 1 February 2009 (2009-02-01), pages 506-516, XP011247287, ISSN: 0018-9545**

• **"DIGITAL RADIO MONDIALE DRM DAYTIME MW TESTS", , 18 March 2005 (2005-03-18), XP055136800, Retrieved from the Internet: URL:http://drm.encours.fr/wp-content/uploa ds/2012/10/ITU-R_WP6E_175_madrid.pdf [retrieved on 2014-08-27]**

• **"Digital Radio Mondiale (DRM) DIGITAL RADIO MONDIALE DRM LOCAL COVERAGE USING THE 26 MHz BROADCASTING BAND CONTENTS", , 30 September 2005 (2005-09-30), XP055136802, Retrieved from the Internet: URL:http://drm.encours.fr/wp-content/uploa ds/2012/10/ITU-R_WP6E_274_Mexico_local coverage.pdf [retrieved on 2014-08-27]**

**Description**

La présente invention concerne un procédé d'analyse de séries de mesures d'ondes électromagnétiques.

Il existe de nombreuses applications requérant l'analyse de données relatives à des mesures d'ondes électromagnétiques effectuées de façon périodique le long d'un circuit. Par exemple, il est connu d'établir une cartographie de la qualité de réception des ondes d'un réseau de téléphonie cellulaire ou de télévision numérique, le long d'un circuit urbain et/ou rural typiquement parcouru en voiture, afin d'identifier d'éventuelles zones présentant des réceptions insatisfaisantes des ondes électromagnétiques concernées.

A cet effet, le circuit peut être parcouru à plusieurs reprises afin de permettre une estimation, ou mesure, globale de la qualité du réseau le long dudit circuit à partir d'une pluralité de séries de mesures, ce qui accroît la fiabilité de l'estimation.

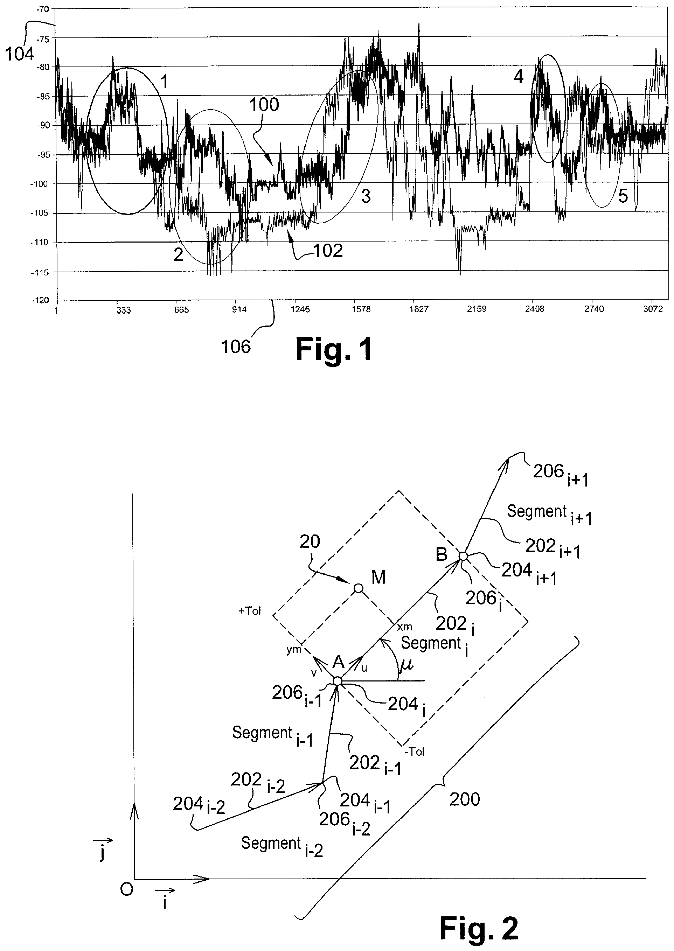

En référence à la figure 1 sont représentées deux séries 100 et 102 de mesures d'une puissance de réception d'un signal électromagnétique (axe des ordonnées 104, en dBm; axe des abscisses 106, en secondes) obtenues le long d'un même circuit urbain d'une longueur de 15.7 km. Dans cette figure, chaque point d'abscisse correspond à une mesure prise à une seconde d'intervalle.

D'une façon générale, la longueur des circuits peut osciller entre quelques kilomètres et des dizaines, voire des centaines, de kilomètres.

La présente invention résulte de la constatation que l'exploitation de telles séries de mesures périodiquement enregistrées requiert un long et coûteux travail de resynchronisation des mesures issues des différents parcours d'un même circuit.

De fait, il existe généralement des raisons aléatoires, telles que l'intensité du trafic ou l'indication variable des feux de signalisation, qui modifient la vitesse de déplacement du véhicule transportant le dispositif d'enregistrement des mesures le long du circuit.

Or, comme précédemment indiqué, les mesures des séries 100 et 102 sont enregistrées de façon périodique de telle sorte que la référence des mesures (axe des abscisses 106) correspond à un délai à compter du début des mesures.

De ce fait et compte tenu des aléas dans le parcours d'un circuit qui modifient la vitesse de parcours du circuit d'une série à une autre, les séries 100 et 102 de mesures sont désynchronisées entre elles, sur tout ou partie du circuit parcouru, de telle sorte qu'une $n^{ième}$ mesure de la série 100 de mesures issue d'un circuit ne correspond pas obligatoirement à l'endroit où a été effectuée la $n^{ième}$ mesure de la série 102 issue du même circuit.

L'exemple de la figure 1 illustre ce problème. Après une brève séquence de mesures où les deux séries sont synchronisées lors d'une période 1, ces mêmes séries de mesures se désynchronisent (périodes 2 et 3) avant de se resynchroniser (période 4) puis de se désynchroniser définitivement (période 5) de façon imprévisible.

De telles désynchronisations requérant un long et coûteux travail de traitement des données afin d'être corrigées pour faire correspondre des mesures relatives à des zones identiques d'un même circuit, i.e. pour synchroniser les séries, la présente invention vise à pallier cet inconvénient en fournissant un procédé qui permet de traiter automatiquement les séries de mesures pour synchroniser les données.

On pourra également se référer au document "DRM Local coverage tests using the 26 MHz broadcasting band" (José Maria Matias et al. - IEEE TRANSCACTIONS ON BROADCASTING - vol 53, n°1, 1 mars 2007) qui décrit un protocole de mesure pour tester l'efficacité de la couverture d'un système de radio numérique ainsi qu'aux documents suivants :

- "Digital Radio Mondiale (DRM); Receiver Status and Control Interface" (ETSI TS 102 349 v1.2.1 - 01 novembre 2005);
- "Generalization of the Lee Method for the Analysis of the Signal Variability" (IEE TRANSACTIONS ON VEHICULAR TECHNOLOGY - vol. 58, n°2, 1 février 2009) ;
- "Digital Radio Mondiale DRM Daytime MW Tests" (18 mars 2005, XP055136800);
- « Digital Radio Mondiale DRM Local coverage using the 26 MHz broadcasting band contents » (30 septembre 2005, XP055136802).

Plus précisément la présente invention concerne un procédé d'analyse de séries de mesures d'ondes électromagnétiques, lesdites mesures étant associées à des positions géographiques d'un dispositif mis en oeuvre pour effectuer ces mesures lors de parcours d'un circuit effectués à plusieurs reprises afin d'obtenir plusieurs séries de mesures relatives au circuit, dans lequel:

- on décompose certains au moins des parcours en une série de segments successifs définis par une position géographique de départ et une position géographique d'arrivée,
- on associe à certains au moins des segments, pour des parcours décomposés, une mesure globale de réception d'ondes électromagnétiques obtenue à partir des mesures effectuées pendant le parcours de ces segments, et

- on analyse des mesures d'ondes électromagnétiques du circuit à partir des mesures globales en comparant les mesures globales de segments identiques,
- on détermine en outre qu'une mesure a été effectuée pendant le parcours d'un segment donné lorsque la distance entre la position géographique du dispositif, lors de ladite mesure, et une position géographique de départ du segment donné est inférieure à une longueur prédéterminée telle que la longueur dudit segment donné.

Grâce à un tel procédé, les mesures effectuées le long d'un circuit de mesure sont associées à des positions géographiques sur ledit circuit de mesures de telle sorte qu'il est aisé de comparer différentes séries de données en comparant les données de ces séries selon leurs positions géographiques, ce qui simplifie l'analyse des données des mesures, notamment en affranchissant leur analyse des problèmes aléatoires de déplacement dans le circuit de mesure.

Selon une réalisation, on établit en outre, comme position géographique de départ d'un segment donné, la première position de mesure du dispositif qui n'appartient pas à un segment précédent.

Dans une réalisation, on détermine en outre la distance d'une position du dispositif vis-à-vis de la position de départ d'un segment comme la distance entre le projeté orthogonal de ladite position de mesure sur ledit segment et la position de départ du segment.

La présente invention concerne également un procédé d'analyse de séries de mesures d'ondes électromagnétiques, lesdites mesures étant associées à des positions géographiques d'un dispositif mis en oeuvre pour effectuer ces mesures lors de parcours d'un circuit effectués à plusieurs reprises afin d'obtenir plusieurs séries de mesures relatives au circuit, dans lequel :

- on décompose le circuit en une série de segments successifs définis par une position géographique de départ et une position géographique d'arrivée,
- on associe à chaque segment, une mesure globale de réception d'ondes électromagnétiques obtenue à partir des mesures effectuées pendant le parcours de ce segment,

ledit procédé étant caractérisé en ce qu'il comporte les étapes suivantes :

- on analyse des mesures d'ondes électromagnétiques du circuit à partir des mesures globales en comparant les mesures globales de segments identiques,
- on détermine en outre la distance d'une position du dispositif vis-à-vis de la position de départ d'un segment comme la distance entre le projeté orthogonal de ladite position de mesure sur ledit segment et la position de départ du segment.

Selon une réalisation des procédés selon l'invention, on exclut en outre une mesure de l'analyse lorsque la distance du dispositif, lors de cette mesure, vis-à-vis du segment en cours d'analyse, est supérieure à une distance de tolérance.

Dans une réalisation, on définit en outre la distance du dispositif vis-à-vis du segment comme la distance entre la position de départ du segment et le projeté orthogonal de ladite position du dispositif sur un axe orthogonal au segment et passant par la position de départ du segment. Selon une réalisation, on transforme en outre les coordonnées sphériques d'une position de mesure du dispositif en coordonnées cartésiennes en utilisant des équations de projection orthographique du type:

$$X = R \cos(\Phi) \sin(\lambda - \lambda_0)$$

$$Y = R \left[ \cos(\Phi_0) \sin(\Phi) - \sin(\Phi_0) \cos(\Phi) \cos(\lambda - \lambda_0) \right]$$

avec $\lambda$ la longitude et $\Phi$ la latitude de la position géographique de la mesure concernée, $\lambda_0$ la longitude et $\Phi_0$ la latitude de la position géographique de la position de départ du circuit, R la distance du point de mesure par rapport au centre de la terre et (X,Y) les coordonnées cartésiennes de la position de mesure établies vis-à-vis d'un repère cartésien (o,i, j) constant pour l'ensemble des mesures.

Selon une réalisation, on établit en outre l'origine du repère cartésien constant à la position d'origine du repère sphérique et/ou à la position géographique de la première mesure.

Dans une réalisation on détermine en outre les coordonnées cartésiennes d'une position de mesure vis-à-vis d'un repère cartésien orthogonal, propre au segment considéré, centré sur la position de départ du segment en cours d'analyse et dont un axe est confondu avec le segment en cours d'analyse de telle sorte que, en considérant :

- ($X_A$, $Y_A$) les coordonnées de ladite position de départ A dans le repère cartésien constant,
- ($X_M$, $Y_M$) les coordonnées de la position de la mesure M en cours d'analyse dans le repère cartésien constant,

Les coordonnées cartésiennes du point de mesure deviennent, dans le repère propre au segment considéré

$$X'_M = \cos(\mu)(X_M - X_A) + \sin(\mu)(Y_M - Y_A)$$

$$Y'_M = -\sin(\mu)(X_M - X_A) + \cos(\mu)(Y_M - Y_A)$$

L'invention concerne également des séries de mesures d'ondes électromagnétiques, lesdites mesures étant associées à des positions géographiques d'un dispositif mis en oeuvre pour effectuer ces mesures lors de parcours d'un circuit effectués à plusieurs reprises afin d'obtenir plusieurs séries de mesures relatives audit circuit, obtenues en mettant en oeuvre un procédé conforme à l'une des réalisations précédentes comprenant:

- la décomposition de certains au moins des parcours en une série de segments successifs définis par une position géographique de départ et une position géographique d'arrivée,
- l'association à certains au moins des segments, pour des parcours décomposés, d'une mesure globale de réception d'ondes électromagnétiques obtenue à partir des mesures effectuées pendant le parcours de ces segments, et
- l'analyse de mesures d'ondes électromagnétiques du circuit à partir des mesures globales en comparant les mesures globales de segments identiques.

D'autres caractéristiques et avantages de l'invention apparaîtront à la lumière de la description ci-dessous, effectuée à titre illustrative et non limitatif, en référence aux figures ci-jointes sur lesquelles sont représentées :

- à la figure 1 déjà décrite, un diagramme représentatif de deux séries de mesures d'ondes électromagnétiques obtenues le long d'un même circuit selon un procédé conforme à l'art antérieur,
- à la figure 2, une description schématique d'une transformation de données sphériques en données cartésiennes selon une réalisation de l'invention,
- à la figure 3, une description schématique d'une utilisation de données sphériques pour l'obtention de mesures sur un parcours,
- à la figure 4, un diagramme représentatif de deux séries de mesures d'un premier paramètre d'ondes électromagnétiques obtenues selon un procédé conforme à l'invention le long du circuit considéré à la figure 1, et
- à la figure 5, un diagramme représentatif de deux séries de mesures d'un second paramètre d'ondes électromagnétiques obtenues selon un procédé conforme à l'invention.

Dans la description suivante, les éléments identiques, par structure ou par fonction, apparaissant sur différentes figures conservent, sauf précision contraire, les mêmes références.

Un procédé d'analyse de données conforme à l'invention a trait à des séries de mesures d'ondes électromagnétiques relatives à, par exemple, une qualité de transmission des données d'un réseau de télécommunication comme un réseau cellulaire ou un réseau de télévision numérique.

Une telle qualité de transmission peut être représentative d'une ou de plusieurs propriétés d'ondes électromagnétiques, telles qu'une intensité, un taux de perte, un débit et/ou un taux de transmission, codant des informations.

Afin de tester la qualité d'un tel réseau de télécommunications, il est connu d'associer chaque mesure d'ondes électromagnétiques à la position géographique du dispositif mis en oeuvre pour effectuer cette mesure, les positions géographiques successifs du dispositif correspondant généralement à un parcours d'un circuit permettant d'obtenir plusieurs séries de mesures pour un même circuit.

Conformément à l'invention, un tel circuit 200 (figure 2) est décomposé en une série de segments $202_i$ successifs définis chacun par une position géographique $204_i$ de départ et une position géographique $206_i$ d'arrivée, ces positions étant définies par rapport à un même repère (o,$\vec{i}$,$\vec{j}$).

Typiquement, la position géographique $204_i$ de départ d'un segment i correspond à la première position de mesure du dispositif de mesure (non représenté) qui n'appartient pas à un segment précédent i-1 tandis que la position géographique $206_i$ d'arrivée d'un segment i correspond à la dernière position de mesure du dispositif de mesure située à une distance xm de la position de départ $204_i$ inférieure à la longueur du segment i considéré, constante dans cet exemple.

Grâce à une telle décomposition, une mesure globale peut être établie à partir des mesures obtenues, pendant chaque parcours, pour chaque segment i. Par exemple, cette mesure globale peut être une moyenne, pondérée ou pas, des mesures obtenues lors du parcours considéré.

Pour mettre en oeuvre simplement ces opérations, il convient de noter que la position géographique des dispositifs de mesures qui génèrent des mesures, ou données 20, est généralement décrite au moyen de coordonnées du type sphériques, conformément aux coordonnées fournies par des systèmes satellitaires comme le système GPS, pour « Global Positioning System », ou le système Galileo.

Or l'utilisation de coordonnées du type sphériques ne permet pas de déterminer simplement une distance entre deux points de mesure alors même qu'une telle distance est requise pour savoir si une mesure M doit être associée à un segment i. De fait, la transformation des coordonnées des lieues de mesures, de type sphériques en type cartésien, également dénommée en projection orthographique, est nécessaire pour pouvoir déterminer une distance d'un point à un autre et, de ce fait, de savoir si un point de mesure M appartient à un segment i.

C'est pourquoi, dans cette réalisation, l'invention met en oeuvre une transformation des données du type sphérique de la position de chaque mesure 20, comprenant une latitude et une longitude, en coordonnées cartésiennes.

De fait, l'utilisation de coordonnées cartésiennes permet de mettre en oeuvre un calcul simple de la distance d'une position M de mesure 20 vis-à-vis de la position $204_i$ de départ d'un segment i, à savoir la distance xm entre le projeté orthogonal de ladite position de mesure sur ledit segment et la position de départ du segment.

De façon pratique, cette transformation des coordonnées sphériques d'une position de mesure en coordonnées cartésiennes (X, Y) dans le repère $(o, \vec{i}, \vec{j})$ peut être mise en oeuvre en utilisant les équations suivantes :

$$X = R \cos(\Phi) \sin(\lambda - \lambda_0)$$

$$Y = R [\cos(\Phi_0) \sin(\Phi) - \sin(\Phi_0) \cos(\Phi) \cos(\lambda - \lambda_0)]$$

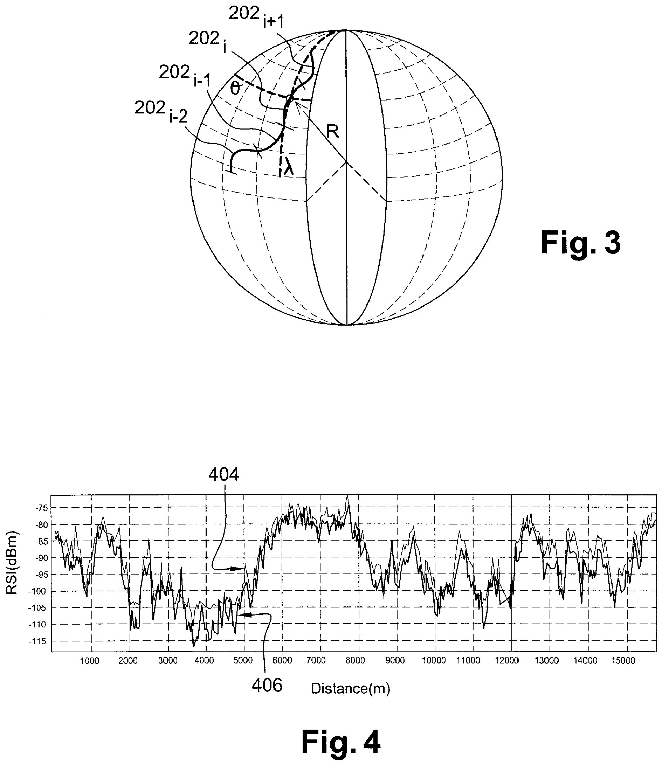

Avec la longitude $\lambda$ et $\Phi$ la latitude de la position géographique de la mesure concernée comme représentée sur la figure 3.

En considérant que cette longitude et cette latitude correspondent aux coordonnées vis-à-vis du centre de la terre, $\lambda_0$ la longitude et $\Phi_0$ la latitude terrestres de la position de départ - à savoir la première mesure - et R la distance du point de mesure par rapport au centre de la Terre, il apparaît que (X,Y) sont les coordonnées cartésiennes de la position de mesure dans un repère cartésien constant dont l'axe des ordonnées correspond à l'axe polaire.

De façon à simplifier les calculs, on établit ainsi l'origine du référentiel cartésien à la position d'origine du repère sphérique et/ou à la position géographique de la première mesure.

Pour plus de simplicité dans le calcul de la distance entre une mesure M et un segment, de nouvelles coordonnées cartésiennes de la position M de mesure sont à nouveau calculées vis-à-vis d'un repère (A, u, v) cartésien orthogonal dynamique, c'est-à-dire variable et propre au segment en cours d'analyse car centré sur la position de départ de ce segment en cours d'analyse, un axe dudit repère dynamique étant confondu avec le segment en cours de mesure. En considérant :

- $(X_A, Y_A)$ les coordonnées de ladite position de départ A dans le repère cartésien constant, et
- $(X_M, Y_M)$ les coordonnées de la position de la mesure M en cours d'analyse dans le repère cartésien constant,

Il apparaît que, dans ce cas, les coordonnées cartésiennes $X'_M$ et $Y'_M$ de la position M de mesure deviennent, dans le repère (A, u, v) propre au segment considéré

$$X'_M = \cos(\mu)(X_M - X_A) + \sin(\mu)(Y_M - Y_A)$$

$$Y'_M = -\sin(\mu)(X_M - X_A) + \cos(\mu)(Y_M - Y_A)$$

Avec $\mu$ correspondant à l'angle formé par le segment i en cours de traitement et le repère (O,i,j).

Grâce à un tel traitement des données, il est possible d'analyser les mesures des ondes électromagnétiques à partir des mesures globales en comparant les mesures globales de segments pratiquement identiques entre elles comme montré sur la figure 4.

Plus précisément, cette figure 4 montre deux séries 404 et 406 de mesures obtenues le long d'un même circuit de mesures, à savoir le circuit mis en oeuvre pour obtenir les séries 100 et 102 déjà décrites à la figure 1.

Toutefois, contrairement aux séries 100 et 102, il apparaît que les séries 404 et 406 sont constamment synchronisées de telle sorte qu'une nième mesure selon l'axe des abscisses 402 correspondent à une même position - un segment pratiquement identique - de mesure pour les deux séries.

La présente invention est susceptible de nombreuses variantes. Notamment, il est possible de prévoir que, dans une réalisation, une mesure soit exclue de l'analyse d'un segment i lorsque la distance du dispositif, lors de cette mesure, vis-à-vis du segment en cours d'analyse, est supérieure à une distance de tolérance définie, par exemple, comme la distance entre la position 20 de départ 204i du segment i et le projeté orthogonal ym de ladite position 20 du dispositif sur un axe orthogonal v au segment i et passant par la position 204i de départ du segment.

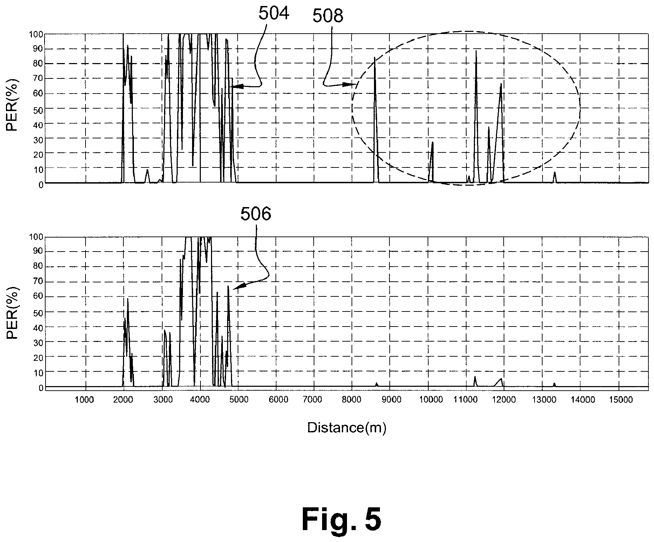

Selon une autre variante, le dispositif de mesure permet de tracer et de comparer d'autres types de mesures telles qu'un taux d'erreur dans les signaux reçus. Ainsi, la figure 5 illustre des mesures d'un tel taux d'erreur mesuré pour des signaux le long du circuit mis en oeuvre pour l'obtention des figures 1 et 4.

Ainsi, la série 504 représente un taux d'erreur mesuré sur le circuit et la série 506 représente la même mesure, sur le même circuit, après avoir modifié des paramètres de transmission. La zone marquée 508 permet de se rendre compte de l'efficacité de la modification du paramétrage de transmission et permet une analyse rapide et précise de l'emplacement, sur le circuit, de la zone corrigée.

## Revendications

1. Procédé d'analyse de séries (404, 406) de mesures (20) d'ondes électromagnétiques, lesdites mesures (20) étant associées à des positions (M) géographiques d'un dispositif mis en oeuvre pour effectuer ces mesures (20) lors de parcours d'un circuit effectués à plusieurs reprises afin d'obtenir plusieurs séries (404, 406) de mesures relatives au circuit, dans lequel:

   - on décompose le circuit en une série de segments (i-1, i, i+1) successifs définis par une position géographique de départ ($204_{i-1}$, $204_i$, $204_{i+1}$) et une position géographique d'arrivée ($206_{i-1}$, $206_i$, $206_{i+1}$),
   - on associe à chaque segment (i-1, i, i+1), une mesure globale de réception d'ondes électromagnétiques obtenue à partir des mesures (20) effectuées pendant le parcours de ce segment (i-1, i, i+1),
   - on analyse des mesures d'ondes électromagnétiques du circuit à partir des mesures globales en comparant les mesures globales de segments (i-1, i, i+1) identiques

   ledit procédé étant **caractérisé en ce qu'**il comporte l'étape suivante:

   - on détermine en outre qu'une mesure (20) a été effectuée pendant le parcours d'un segment donné (i-1, i, i+1) lorsque la distance entre la position (M) géographique du dispositif, lors de ladite mesure (20), et une position géographique de départ ($204_{i-1}$, $204_i$, $204_{i+1}$) du segment donné (i-1, i, i+1) est inférieure à une longueur prédéterminée telle que la longueur dudit segment donné (i-1, i, i+1).

2. Procédé selon la revendication 1 dans lequel on établit en outre, comme position géographique de départ ($204_{i-1}$, $204_i$, $204_{i+1}$) d'un segment donné (i-1, i, i+1), la première position de mesure du dispositif qui n'appartient pas à un segment précédent.

3. Procédé selon la revendication 1, dans lequel on détermine en outre la distance d'une position (M) du dispositif vis-à-vis de la position de départ ($204_{i-1}$, 204i, $204_{i+i}$) d'un segment (i-1, i, i+1) comme la distance entre le projeté orthogonal (xm) de ladite position (M) de mesure sur ledit segment (i-1, i, i+1) et la position de départ du segment ($204_{i-1}$, $204_i$, $204_{i+1}$).

4. Procédé d'analyse de séries (404, 406) de mesures (20) d'ondes électromagnétiques, lesdites mesures (20) étant associées à des positions (M) géographiques d'un dispositif mis en oeuvre pour effectuer ces mesures (20) lors de parcours d'un circuit effectués à plusieurs reprises afin d'obtenir plusieurs séries (404, 406) de mesures relatives au circuit, dans lequel:

   - on décompose le circuit en une série de segments (i-1, i, i+1) successifs définis par une position géographique de départ ($204_{i-1}$, $204_i$, $204_{i+1}$) et une position géographique d'arrivée ($206_{i-1}$, $206_i$, $206_{i+1}$),
   - on associe à chaque segment (i-1, i, i+1), une mesure globale de réception d'ondes électromagnétiques obtenue à partir des mesures (20) effectuées pendant le parcours de ce segment (i-1, i, i+1),
   - on analyse des mesures d'ondes électromagnétiques du circuit à partir des mesures globales en comparant les mesures globales de segments (i-1, i, i+1) identiques,

ledit procédé étant **caractérisé en ce qu'**il comporte l'étape suivante:

- on détermine en outre la distance d'une position (M) du dispositif vis-à-vis de la position de départ ($204_{i-1}$, $204_i$, $204_{i+i}$) d'un segment (i-1, i, i+1) comme la distance entre le projeté orthogonal (xm) de ladite position (M) de mesure sur ledit segment (i-1, i, i+1) et la position de départ du segment ($204_{i-1}$, $204_i$, $204_{i+1}$).

5. Procédé selon la revendication 3 ou 4 dans lequel on exclut en outre une mesure (20) de l'analyse lorsque la distance du dispositif, lors de cette mesure (20), vis-à-vis du segment (i-1, i, i+1) en cours d'analyse, est supérieure à une distance de tolérance (Ttol).

6. Procédé selon la revendication 5 dans lequel on définit en outre la distance du dispositif vis-à-vis du segment comme la distance entre la position de départ du segment ($204_{i-1}$, $204_i$, $204_{i+1}$) et le projeté (ym) orthogonal de ladite position du dispositif sur un axe orthogonal au segment (i-1, i, i+1) et passant par la position de départ ($204_{i-1}$, $204_i$, $204_{i+1}$; $204_{i-1}$, $204_i$, $204_{i+1}$) du segment (i-1, i, i+1).

7. Procédé selon l'une des revendications précédentes dans lequel on transforme en outre les coordonnées sphériques d'une position (M) de mesure (20) du dispositif en coordonnées cartésiennes en utilisant des équations de projection orthographique du type:

$$X = R \cos(\Phi) \sin(\lambda - \lambda_0)$$

$$Y = R [\cos(\Phi_0) \sin(\Phi) - \sin(\Phi_0) \cos(\Phi) \cos(\lambda - \lambda_0)]$$

avec $\lambda$ la longitude et $\Phi$ la latitude de la position géographique de la mesure concernée, $\lambda_0$ la longitude et $\Phi_0$ la latitude de la position géographique de la position de départ du circuit, R la distance du point de mesure par rapport au centre de la terre et (X,Y) les coordonnées cartésiennes de la position de mesure établies vis-à-vis d'un repère cartésien (o,i,j) constant pour l'ensemble des mesures.

8. Procédé selon la revendication 7 dans lequel on établit en outre l'origine du repère cartésien constant à la position d'origine du repère sphérique et/ou à la position géographique de la première mesure.

9. Procédé selon la revendication 7 ou 8, dans lequel on détermine en outre les coordonnées cartésiennes d'une position de mesure vis-à-vis d'un repère cartésien orthogonal (A, u, v), propre au segment considéré, centré sur la position de départ ($204_{i-1}$, $204_i$, $204_{i+1}$) du segment en cours d'analyse et dont un axe est confondu avec le segment en cours d'analyse de telle sorte que, en considérant :

- ($X_A$, $Y_A$) les coordonnées de ladite position de départ A dans le repère cartésien constant (O,i,j),
- ($X_M$, $Y_M$) les coordonnées de la position de la mesure M en cours d'analyse dans le repère cartésien constant (O,i,j),

Les coordonnées cartésiennes du point de mesure deviennent, dans le repère (A, u, v) propre au segment considéré

$$X'_M = \cos(\mu)(X_M - X_A) + \sin(\mu)(Y_M - Y_A)$$

$$Y'_M = -\sin(\mu)(X_M - X_A) + \cos(\mu)(Y_M - Y_A)$$

avec $\mu$ correspondant à l'angle formé par le segment i en cours de traitement et le repère (O,i,j).

**Patentansprüche**

1. Verfahren von Serienanalysen (404, 406) von Messungen (20) elektromagnetischer Wellen, wobei die genannten Messungen (20) geographischen Positionen (M) einer Vorrichtung zugeordnet sind, die umgesetzt ist, um diese Messungen (20) beim Verlauf eines Schaltkreises durchzuführen, die in mehreren Wiederholungen durchgeführt sind, um mehrere Serien (404, 406) von Messungen bezüglich des Schaltkreises zu erhalten, bei dem:

- der Schaltkreis in eine Serie von sukzessiven Segmenten (i-1, i, i+1) zerlegt ist, die durch eine geographische Ausgangsposition ($204_{i-1}$, $204_i$, $204_{i+i}$) und eine geographische Ankunftsposition ($206_{i-1}$, $206_i$, $206_{i+1}$) definiert sind;
- jedem Segment (i-1, i, i+1) eine globale Messung der Aufnahme elektromagnetischer Wellen zugeordnet ist, die ausgehend von Messungen (20) erhalten ist, die während des Verlaufs dieses Segments (i-1, i, i+1) durchgeführt sind,
- Messungen von elektromagnetischen Wellen des Schaltkreises ausgehend von globalen Messungen analysiert sind, indem globale Messungen von identischen Segmenten (i-1, i, i+1) verglichen sind,

wobei das genannte Verfahren **dadurch gekennzeichnet ist, dass** es den folgenden Schritt umfasst:

- Bestimmt wird darüber hinaus, dass eine Messung (20) während des Verlaufs eines bestimmten Segments (i-1, i, i+1) durchgeführt wurde, wenn die Entfernung zwischen der geographischen Position (M) der Vorrichtung bei der genannten Messung (20) und einer geographischen Ausgangsposition ($204_{i-1}$, $204_i$, $204_{i+1}$) des bestimmten Segments (i-1, i, i+1) geringer ist als eine vorbestimmte Länge, wie z. B. die Länge des genannten bestimmten Segments (i-1, i, i+1).

2. Verfahren gemäß Anspruch 1, bei dem darüber hinaus als geographische Ausgangsposition ($204_{i-1}$, $204_i$, $204_{i+1}$) eines bestimmten Segments (i-1, i, i+1) die erste Messposition der Vorrichtung festgelegt ist, die nicht in einem vorherigen Segment erscheint.

3. Verfahren gemäß Anspruch 1, bei dem darüber hinaus die Entfernung einer Position (M) der Vorrichtung gegenüber der Ausgangsposition ($204_{i-1}$, $204_i$, $204_{i+1}$) eines Segments (i-1, i, i+1) als die Entfernung zwischen der orthogonalen Projektion (xm) der genannten Messposition (M) in dem genannten Segment (i-1, i, i+1) und der Ausgangsposition des Segments ($204_{i-1}$, $204_i$, $204_{i+1}$) bestimmt wird.

4. Verfahren von Serienanalysen (404, 406) von Messungen (20) elektromagnetischer Wellen, wobei die genannten Messungen (20) geographischen Positionen (M) einer Vorrichtung zugeordnet sind, die umgesetzt ist, um diese Messungen (20) beim Verlauf eines Schaltkreises durchzuführen, die in mehreren Wiederholungen durchgeführt sind, um mehrere Serien (404, 406) von Messungen bezüglich des Schaltkreises zu erhalten, bei dem:

- der Schaltkreis in eine Serie von sukzessiven Segmenten (i-1, i, i+1) zerlegt ist, die durch eine geographische Ausgangsposition ($204_{i-1}$, $204_i$, $204_{i+1}$) und eine geographische Ankunftsposition ($206_{i-1}$, $206_i$, $206_{i+1}$) definiert sind;
- jedem Segment (i-1, i, i+1) eine globale Messung der Aufnahme elektromagnetischer Wellen zugeordnet ist, die ausgehend von Messungen (20) erhalten ist, die während des Verlaufs dieses Segments (i-1, i, i+1) durchgeführt sind,
- Messungen von elektromagnetischen Wellen des Schaltkreises ausgehend von globalen Messungen analysiert sind, indem globale Messungen von identischen Segmenten (i-1, i, i+1) verglichen werden,

wobei das genannte Verfahren **dadurch gekennzeichnet ist, dass** es den folgenden Schritt umfasst:

- Bestimmt wird darüber hinaus die Entfernung einer Position (M) der Vorrichtung gegenüber der Ausgangsposition ($204_{i-1}$, $204_i$, $204_{i+1}$) eines Segments (i-1, i, i+1) als die Entfernung zwischen der orthogonalen Projektion (xm) der genannten Messposition (M) in dem genannten Segment (i-1, i, i+1) und der Ausgangsposition des Segments ($204_{i-1}$, $204_i$, $204_{i+1}$).

5. Verfahren gemäß Anspruch 3 oder 4, bei dem darüber hinaus eine Messung (20) der Analyse ausgeschlossen ist, wenn die Entfernung der Vorrichtung bei dieser Messung (20) gegenüber dem Segment (i-1, i, i+1) im Verlauf der Analyse größer als eine Toleranzentfernung (Ttol) ist.

6. Verfahren gemäß Anspruch 5, bei dem darüber hinaus die Entfernung der Vorrichtung gegenüber dem Segment als die Entfernung zwischen der Ausgangsposition des Segments ($204_{i-1}$, $204_i$, $204_{i+1}$) und der orthogonalen Projektion (ym) der genannten Position der Vorrichtung auf einer zum Segment (i-1, i, i+1) orthogonalen Achse, die an der Ausgangsposition ($204_{i-1}$, $204_i$, $204_{i+1}$, $204_{i-1}$, $204_i$, $204_{i+1}$) des Segments (i-1, i, i+1) vorbeiläuft, definiert ist.

7.  Verfahren gemäß einem der voranstehenden Ansprüche, bei dem darüber hinaus die sphärischen Koordinaten einer Position (M) zur Messung (20) der Vorrichtung in kartesischen Koordinaten umgewandelt ist, indem Parallelprojektions-Gleichungen verwendet sind vom Typ:

$$X = R \cos (\Phi) \sin (\lambda - \lambda 0)$$

$$Y = R \left[ \cos (\Phi 0) \sin (\Phi) \cos (\Phi) \cos (\lambda - \lambda 0) \right.$$

wobei $\lambda$ die Länge und $\Phi$ die Breite der geographischen Position der betroffenen Messung, $\lambda 0$ die Länge und $\Phi 0$ die Breite der geographischen Position der Ausgangsposition des Schaltkreises, R die Entfernung des Messpunktes in Bezug auf das Zentrum der Erde und (X, Y) die kartesischen Koordinaten der Messposition sind, die gegenüber einem konstanten kartesischen Fixpunkt (o, i, j) für alle Messungen festgelegt sind.

8.  Verfahren gemäß Anspruch 7, bei dem darüber hinaus der Ursprung des konstanten kartesischen Fixpunktes an der Ursprungsposition des sphärischen Fixpunktes und / oder der geographischen Position der ersten Messung festgelegt ist.

9.  Verfahren gemäß Anspruch 7 oder 8, bei dem darüber hinaus die kartesischen Koordinaten einer Messposition gegenüber einem orthogonalen kartesischen Fixpunkt (A, u, v), der für das betrachtete Segment spezifisch und in der Ausgangsposition ($204_{i-1}$, $204_i$, $204_{i+1}$) des sich in der Analyse befindenden Segments zentriert ist und deren eine Achse mit dem sich in der Analyse befindenden Segment derart zusammenfällt, dass bei der Betrachtung:

    - $(X_A, Y_A)$ die Koordinaten der genannten Ausgangsposition A in dem konstanten kartesischen Fixpunkt (O, i, i);
    - $(X_M, Y_M)$ die Koordinaten der sich in der Analyse befindenden Position der Messung M im konstanten kartesischen Fixpunkt (O, i, j),
    die kartesischen Koordinaten des Messpunkte in dem Fixpunkt (A, u, v)
    für das betrachtete Segment spezifische werden

$$X'_M = \cos (\mu) (X_M - X_A) + \sin (\mu) (Y_M - Y_A)$$

$$Y'_M = - \sin (\mu) (X_M - X_A) + \cos (\mu) (Y_M - Y_A)$$

wobei $\mu$ dem Winkel entspricht, der von dem sich in Bearbeitung befindenden Segment i und dem Fixpunkt (O, i, j) gebildet ist, entspricht.

**Claims**

1.  A method for analysing series (404, 406) of measurements (20) of electromagnetic waves, said measurements (20) being associated with geographical positions (M) of a device implemented to perform these measurements (20) upon running a circuit several times in order to obtain several series (404, 406) of measurements relating to the circuit, wherein:

    - the circuit is decomposed into a series of successive segments (i-1, i, i+1) defined by a start geographical position ($204_{i-1}$, $204_i$, $204_{i+1}$) and an end geographical position ($206_{i-1}$, $206_i$, $206_{i+1}$),
    - with each segment (i-1, i, i+1) is associated an overall electromagnetic wave reception measurement obtained from the measurements (20) performed upon running this segment (i-1, i, i+1),
    - electromagnetic wave measurements of the circuit are analysed from the overall measurements by comparing the overall measurements of identical segments (i-1, i, i+1),

    said method being **characterised in that** it includes the following step:

    - it is further determined that a measurement (20) has been performed upon running a given segment (i-1, i, i+1) when the distance between the geographical position (M) of the device, during said measurement (20), and a start geographical position ($204_{i-1}$, $204_i$, $204_{i+1}$) of the given segment (i-1, i, i+1) is lower than a predetermined length such as the length of said given segment (i-1, i, i+1).

2. The method according to claim 1, wherein is further set, as the start geographical position ($204_{i-1}$, $204_i$, $204_{i+1}$) of a given segment (i-1, i, i+1), the first measurement position of the device which does not belong to a previous segment.

3. The method according to claim 1, wherein the distance of a position (M) of the device relative to the start position ($204_{i-1}$, $204_i$, $204_{i+1}$) of a segment (i-1, i, i+1) is further determined as the distance between the orthogonal projection (xm) of said measurement position (M) on said segment (i-1, i, i+1) and the start position of the segment ($204_{i-1}$, $204_i$, $204_{i+1}$).

4. A method for analysing series (404, 406) of measurements (20) of electromagnetic waves, said measurements (20) being associated with geographical positions (M) of a device implemented to perform these measurements (20) upon running a circuit several times in order to obtain several series (404, 406) of measurements relating to the circuit, wherein:

   - the circuit is decomposed into a series of successive segments (i-1, i, i+1) defined by a start geographical position ($204_{i-1}$, $204_i$, $204_{i+1}$) and an end geographical position ($206_{i-1}$, $206_i$, $206_{i+1}$),
   - with each segment (i-1, i, i+1) is associated an overall electromagnetic wave reception measurement obtained from measurements (20) performed upon running this segment (i-1, i, i+1),
   - electromagnetic wave measurements of the circuit are analysed from the overall measurements by comparing the overall measurements of identical segments (i-1, i, i+1),

   said method being **characterised in that** it includes the following step:

   - the distance of a position (M) of the device relative to the start position ($204_{i-1}$, $204_i$, $204_{i+1}$) of a segment (i-1, i, i+1) is further determined as the distance between the orthogonal projection (xm) of said position (M) of measurement on said segment (i-1, i, i+1) and the start position of the segment ($204_{i-1}$, $204_i$, $204_{i+1}$).

5. The method according to claim 3 or 4, wherein a measurement (20) of the analysis is further excluded when the distance of the device, during this measurement (20), relative to the segment (i-1, i, i+1) being analysed, is higher than a tolerance distance (Ttol).

6. The method according to claim 5, wherein the distance of the device relative to the segment is further defined as the distance between the start position of the segment ($204_{i-1}$, $204_i$, $204_{i+1}$) and the orthogonal projection (ym) of said position of the device on an axis orthogonal to the segment (i-1, i, i+1) and passing through the start position ($204_{i-1}$, $204_i$, $204_{i+1}$; $204_{i-1}$, $204_i$, $204_{i+1}$) of the segment (i-1, i, i+1).

7. The method according to one of the preceding claims, wherein the spherical coordinates of a position (M) of measurement (20) of the device are further transformed into Cartesian coordinates using orthographic projection equations of the type:

$$X = R \cos(\Phi) \sin(\lambda - \lambda_0)$$

$$Y = R [\cos(\Phi_0) \sin(\Phi) - \sin(\Phi_0) \cos(\Phi) \cos(\lambda - \lambda_0)]$$

with $\lambda$ the longitude and $\Phi$ the latitude of the geographical position of the measurement concerned, $\lambda_0$ the longitude and $\Phi_0$ the latitude of the geographical position of the start position of the circuit, R the distance of the measurement point with respect to the centre of the Earth and (X, Y) the Cartesian coordinates of the measurement position set relative to a constant Cartesian coordinate system (o, i, j) for all the measurements.

8. The method according to claim 7, wherein the origin of the constant Cartesian coordinate system is further set to the origin position of the spherical coordinate system and/or to the geographical position of the first measurement.

9. The method according to claim 7 or 8, wherein the Cartesian coordinates of a measurement position relative to an orthogonal Cartesian coordinate system (A, u, v), specific to the segment considered, centered to the start position ($204_{i-1}$, $204_i$, $204_{i+1}$) of the segment being analysed and an axis of which is identical to the segment being analysed are further determined such that, considering:

- ($X_A$, $Y_A$) the coordinates of said start position A in the constant Cartesian coordinate system (O, i, j),
- ($X_M$, $Y_M$) the coordinates of the position of the measurement M being analysed in the constant Cartesian coordinate system (O, i, j),

the Cartesian coordinates of the measurement point become, in the coordinate system (A, u, v) specific to the segment considered

$$X'_M = \cos(\mu)(X_M - X_A) + \sin(\mu)(Y_M - Y_A)$$

$$Y'_M = -\sin(\mu)(X_M - X_A) + \cos(\mu)(Y_M - Y_A)$$

with $\mu$ corresponding to the angle formed by the segment i being processed and the coordinate system (O, i, j).

**Fig. 1**

**Fig. 2**

**Fig. 3**

**Fig. 4**

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JOSÉ MARIA MATIAS et al.** DRM Local coverage tests using the 26 MHz broadcasting band. *IEEE TRANSCATIONS ON BROADCASTING,* 01 Mars 2007, vol. 53 (1
- Digital Radio Mondiale (DRM); Receiver Status and Control Interface. *ETSI TS 102 349 v1.2.1,* 01 Novembre 2005
- Generalization of the Lee Method for the Analysis of the Signal Variability. *IEE TRANSACTIONS ON VEHICULAR TECHNOLOGY,* 01 Février 2009, vol. 58
- *Digital Radio Mondiale DRM Daytime MW Tests,* 18 Mars 2005
- *Digital Radio Mondiale DRM Local coverage using the 26 MHz broadcasting band contents,* 30 Septembre 2005